# EUROPÄISCHE PATENTSCHRIFT

(11) **EP 0 944 774 B1**
(45) Veröffentlichungstag und Bekanntmachung des Hinweises auf die Patenterteilung: **13.09.2000**
(21) Anmeldenummer: 97952878.3
(22) Anmeldetag: 04.12.1997
(51) Int. Cl.: F16C 33/38, F16C 33/42, F16C 19/02

(54) **RILLENKUGELLAGER**
DEEP GROOVE BALL BEARING
ROULEMENT RAINURE A BILLES

(30) Priorität: 23.12.1996 DE 19654089
(43) Veröffentlichungstag der Anmeldung: 29.09.1999
(73) Patentinhaber: Continental Teves AG & Co. oHG, 60488 Frankfurt (DE)
(72) Erfinder: DAVID, Anton, D-63303 Dreieich (DE); SHOPPER, Bernd, D-65830 Kriftel (DE); KRIEG, Bernd, D-63633 Birstein (DE)
(74) Vertreter: Blum, Klaus-Dieter
(86) Internationale Anmeldenummer: EP9706784
(87) Internationale Veröffentlichungsnummer: WO9828551

(56) Entgegenhaltungen:
- DE-A- 4 224 980
- DE-A- 4 400 718
- GB-A- 420 874
- GB-A- 1 391 360
- US-A- 3 923 352
- US-A- 4 055 371
- US-A- 4 653 938

## Beschreibung

Die Erfindung betrifft ein Rillenkugellager gemäß dem Oberbegriff des Patentanspruchs 1.

Rillenkugellager haben im Hinblick auf den benötigten Bauraum, die Art der Lagerbelastung und damit auch der Belastungsrichtung, den möglichen übertragbaren Drehzahlen, der Laufgenauigkeit und Laufruhe insbesondere zur Lagerung von Elektromotoren und Pumpen große Bedeutung. Dennoch führt die Verwendung von Rillenkugellagern nicht immer zu einem geräuscharmen Lauf, weshalb gerade im Elektromotorenbau Maßnahmen getroffen werden, die das geräuschverursachende Rillenkugellager mit einer externen Vorspannung beaufschlagen, die jedoch in der Regel zu einer Bauraumvergrößerung infolge zusätzlicher Teile und damit zu zusätzlichen Kosten führt. Es soll deshalb nur beispielhaft auf eine der möglichen Ausführungsformen verwiesen werden, die aus der DE 42 24 980 A1 bekannt geworden ist. Das darin erläuterte Ausführungsbeispiel bezüglich einer Vorspannung der Antriebswelle in Längsrichtung macht deutlich, daß durch die vorgeschlagenen externen Mechanismen keine optimalen Konstruktionslösungen entstehen können.

Die GB-A-1 391 360 beschreibt einen Lagerkäfig für ein Rillenkugellager, der jeweils aus zwei Halbschalen gebildete Kugeltaschen aufweist, die in Axialrichtung des Lagers eine Nennweite aufweisen, welche wesentlich größer ist als der Nenndurchmesser der Kugeln, um ein Axialspielausgleich der Kugeln im Lager zu ermöglichen. Zur Ausübung einer axialen Vorspannkraft auf die Kugeln sind die Kugeltaschen in Axialrichtung gegenüber der Rille des Lagerrings versetzt.

Gemäß dem Rillenkugellager der gattungsbildenden US-A-4 055 371 weisen die Käfigtaschen am Käfigring einen Axialversatz auf, der am Käfig durch sich abwechselnde, die Kugeln führende Vorsprünge gebildet ist. Durch den Axialversatz der Käfigtaschen am Käfigring sind die Kugeln spielfrei in den Rillen der Lagerringe geführt.

Die Aufgabe der Erfindung ist es, ein Rillenkugellager der angegebenen Art dahingehend zu verbessern, daß mit möglichst geringem Mitteleinsatz eine funktionssichere, kleinbauende und kostengünstige Lagergestaltung zustande kommt, die sich im besonderen durch eine einfache, spielfreie Lagerung der Wälzkörper in den Lagerringen auszeichnet.

Diese Aufgabe wird erfindungsgemäß für ein Rillenkugellager der gattungsbildenden Art durch die kennzeichnenden Merkmale des Patentanspruchs 1 gelöst.

Weitere Merkmale, Vorteile sowie Einzelheiten der Erfindung gehen im nachfolgenden aus der Beschreibung mehrerer Ausführungsformen hervor.

Es zeigen:
- Fig. 1: die prinzipielle Darstellung zur Ausrichtung von Wälzkörpern in einem Lager,
- Fig. 2: ein einreihiges Rillenkugellager (nicht Gegenstand der Erfindung nach Anspruch 1),
- Fig. 3: ein Rillenkugellager mit S-förmigem Band.

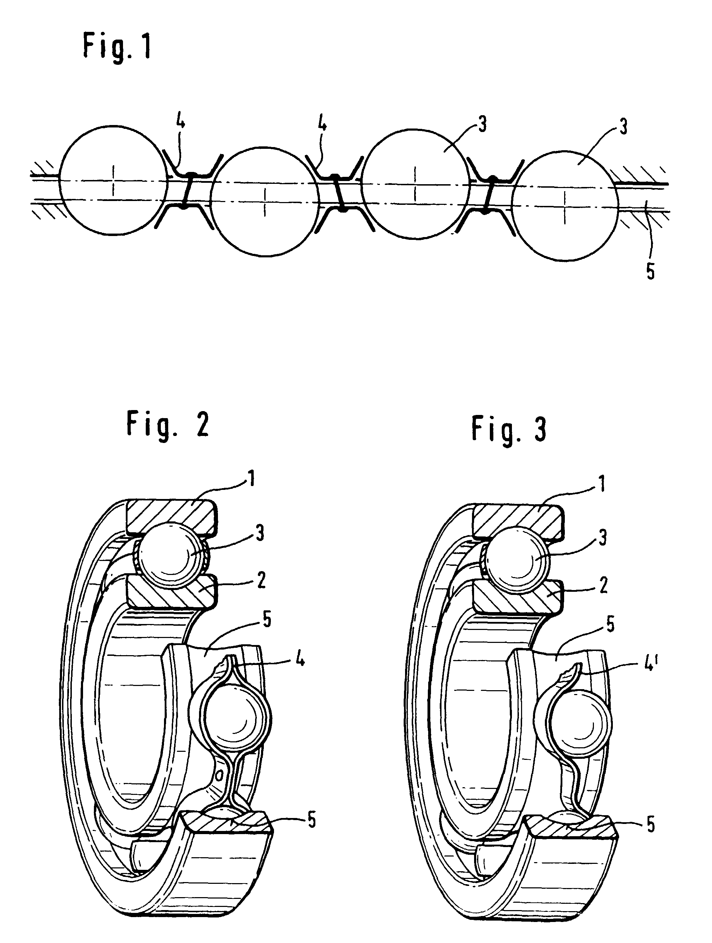

Die Fig. 1 zeigt in erheblich vereinfachter Darstellung die wechselseitige Ausrichtung der kugelförmigen Wälzkörper 3 beiderseits zur Mitte der Rille 5 im Außen- und Innenlagerring 1,2. Die Wälzkörper 3 sind folglich um das Axialmaß der Spielpassung zwischen Außen- und Innenlagerring 1,2 versetzt. Als axialkrafterzeugendes Mittel wirkt hierbei auf die Wälzkörper 3 der gleichfalls nur prinzipiell gezeigte Käfig 4 des Lagers. Der Käfig 4 führt zwangsläufig zu einer Schrägstellung bzw. zu einem Versatz benachbarter Wälzkörper 3 gegenüber den Rillen 5 des Außen- und Innenlagerrings 1,2. Im vorliegenden Ausführungsbeispiel wird der Käfig 4 somit aus parallel zueinander gelegenen Wellscheiben gebildet, die jeweils in ihrem schalenförmig verjüngten Abschnitt zwischen den voneinander beabstandeten Wälzkörpern 3 miteinander form- und/oder kraftschlüssig verbunden sind. Damit befinden sich die Wälzkörper 3 unter geringer Seitenvorspannkraft in einem quasi deachsierten Käfig 4, der für den gewünschten Axialversatz der Kugeln in den Rillen 5 sorgt.

Abweichend von der Prinzipdarstellung nach Fig. 1 kann die Form und Funktion der unter definierter axialer Eigenvorspannkraft stehenden Wellscheibe ebenso in Abwandlung des Käfigs 4 wechselseitig die hintereinander im Lager angeordneten Wälzkörper 3 S-förmig umschlingen. Hierzu wird auf die Ausführungsformen nach Fig. 3 hingewiesen. Um die gewünschte, erfindungsgemäße Wirkung des abgewandelten Käfigs 4 zu erzielen, besteht dieser vorzugsweise aus einem wärmebehandelten Metall, wofür sich im besonderen ein Federstahl eignet, der beim Einbau in das Lager infolge der Spurführung der Wälzkörper 3 in den geradlinigen Rillen 5 seitlich elastisch verspannt wird.

Die Fig. 2 zeigt eine Perspektivdarstellung eines an sich bereits bekannten einreihigen Rillenkugellagers, bestehend aus einem Außen- und einem Innenlagerring 1,2, zwischen denen die Wälzkörper 3 in den Rillen 5 des Außen- und Innenlagerrings 1,2 angeordnet sind. Die Wälzkörper 3 sind in einem Käfig 4 geführt, der im wesentlichen aus zwei wärmebehandelten, axialkrafterzeugenden Bändern besteht, die gemäß der prinzipiellen Darstellung nach Fig. 1 die Kugeln wechselseitig in den Rillen 5 deachsieren, wobei die Bänder an ihren Berührungspunkten zwischen den Kugeln miteinander befestigt sind. Der erfindungsgemäße Käfig 4 weist somit die eingangs beschriebenen Merkmale gemäß Fig. 1 auf.

Ergänzend soll auf eine weitere Ausführungsform des Erfindungsgegenstandes gemäß der Fig. 3 hingewiesen werden. Diese unterscheidet sich hinsichtlich ihrer Konstruktion von den vorangegangenen Ausführungsformen durch die Verwendung eines S-förmig die Wälzkörper 3 teilumschlingenden Bandes 4', das anstelle des Käfigs 4 zwischen den Lagerringen angeordnet ist. Damit entspricht das vorgeschlagenen S-förmige Band 4' in seinem Wesen einer Federwellscheibe, deren Federwirkung bei der Montage durch die lineare Ausrichtung der kugelförmigen Wälzkörper 3 in den Rillen 5 zustandekommt, die die Kugeln nacheinander abwechselnd an die linke oder rechte Rillenflanken drücken.

Durch die hiermit vorgestellte interne Vorspannwirkung im Rillenkugellager können bisher unerwünschte Laufgeräusche nahezu völlig eliminiert werden, ohne zusätzliche Bauteile für die erfindungsgemäße Maßnahme benötigen zu müssen, womit Bauraum eingespart werden kann.

### Bezugszeichenliste

- 1: Außenlagerring
- 2: Innenlagerring
- 3: Wälzkörper
- 4: Käfig
- 4': Band
- 5: Rille

## Patentansprüche

1. Rillenkugellager, mit einem Außen- und einem Innenlagerring (1, 2), zwischen denen Wälzkörper (3) in Rillen (5) des Außen- und Innenlagerrings (1, 2) angeordnet sind, wobei die Wälzkörper (3) in den Rillen (5) geführt und beiderseits zur Mitte der Rillen (5) um ein Axialmaß versetzt sind, mit wenigstens einem auf die Wälzkörper (3) einwirkenden, axialkrafterzeugenden Mittel (4,4'), das zwischen dem Außen- und Innenlagerring (1,2) vorgesehen ist, dadurch **gekennzeichnet,** daß als Mittel ein Band (4') vorgesehen ist, das die Funktion einer unter definierter axialer Eigenvorspannkraft stehenden Federscheibe hat, die die hintereinander im Lager angeordneten Wälzkörper (3) wechselseitig zur Mitte der Rillen (5) vorzugsweise S-förmig umschlingt und die Wälzkörper (3) abwechselnd jeweils an eine von zwei Rillenflanken einer Rille (5) seitlich andrückt, und daß die Vorspannkraft der Federscheibe durch die Ausrichtung der Wälzkörper (3) in den Rillen (5) bestimmt ist.

2. Rillenkugellager nach Anspruch 1, dadurch **gekennzeichnet,** daß das Band (4') aus einem wärmebehandelten, elastisch vorgespannten Metall, insbesondere Federstahl oder aus einem elastischen Kunststoff besteht, das zumindest nach Einbau in das Lager infolge der Spurführung der Wälzkörper (3) in den geradlinigen Rillen (5) eine Axialkraftwirkung auf die Wälzkörper (3) ausübt.

## Claims

1. Grooved ball nearing, which includes an outer and an inner bearing ring (1, 2), inbetween which roll bodies (3) are arranged in grooves (5) of the outer and inner bearing ring (1, 2), wherein the roll bodies (3) are guided in the grooves (5) and are staggered by an axial dimension on both sides with respect to the centre of the grooves (5), with at least one means (4, 4') provided between the outer and inner bearing ring (1, 2) that acts upon the roll bodies (3) and produces an axial force,
**characterized** in that the means is configured as a strap (4') which adopts the function of a spring washer subjected to a defined axial inherent preloading force, the said spring washer alternatingly embracing the roll bodies (3) arranged one after the other in the bearing towards the centre of the grooves (5) in a preferably S-type manner and alternatingly urging the roll bodies (3) laterally against one of two groove flanks of a groove (5), and in that the preloading force of the spring washer is determined by the alignment of the roll bodies (3) in the grooves (5).

2. Grooved ball bearing as claimed in claim 1,
**characterized** in that the strap (4') is made of a thermally treated, elastically biassed metal, especially spring steel or an elastic plastic material, which at least after the installation into the bearing, exerts the effect of an axial force on the roll bodies (3) due to the tracking of the roll bodies (3) in the straight-lined grooves (5).

## Revendications

1. Roulement rainuré à billes comprenant un anneau de palier extérieur (1) et un anneau de palier intérieur (2) entre lesquels des corps de roulement (3) sont disposés dans des rainures (5) des anneaux de palier extérieur et intérieur (1, 2), les corps de roulement (3) étant guidés dans les rainures (5) et étant décalés axialement des deux côtés par rapport au milieu des rainures (5), le roulement comprenant au moins un moyen (4, 4') agissant sur les organes de roulement (3) et générant une force axiale, qui est prévu entre les anneaux de palier extérieur et intérieur (1, 2), caractérisé en ce qu'il est prévu, en tant que moyen, un ruban (4') qui présente la fonction d'un disque de ressort soumis à une force de précontrainte axiale propre et définie, ce disque de ressort entourant, de préférence en forme de S, alternativement de part et d'autre du milieu des rainures (5), les corps de roulement (3) disposés l'un après l'autre dans le roulement, et poussant latéralement les corps de roulement (3) alternativement contre l'un de deux flancs de rainure d'une rainure (5), et en ce que la force de précontrainte du disque de ressort est déterminée par l'alignement des corps de roulement (3) dans les rainures (5).

2. Roulement rainuré à billes selon la revendication 1, caractérisé en ce que le ruban (4') est constitué d'un métal thermiquement traité et précontraint élastiquement, notamment de l'acier de ressort, ou d'une matière plastique élastique, qui, au moins après assemblage dans le roulement, exerce un effet de force axiale sur les corps de roulement (3) par suite de l'alignement des corps de roulement (3) dans les rainures (5) rectilignes.
